# EUROPEAN PATENT APPLICATION

(11) **EP 4 458 742 A1**
(43) Date of publication of application: **06.11.2024**
(21) Application number: 22914578.4
(22) Date of filing: 23.12.2022
(51) Int. Cl.: B65G 47/56, B65G 47/82, B65G 35/00, B65G 43/00, B65G 17/46, G01N 35/04

(54) **DOUBLE-LAYER RAIL APPARATUS AND TRANSFER METHOD FOR TRANSFERRING A SAMPLE HOLDER**

(30) Priority: 29.12.2021 CN 202111646492; 29.12.2021 CN 202123385573 U
(71) Applicant: Autobio Labtec Instruments Co., Ltd., Zhengzhou, Henan 450016 (CN)
(72) Inventor: XU, Can, Zhengzhou, Henan 450016 (CN); ZHAO, Peng, Zhengzhou, Henan 450016 (CN); WU, Pei, Zhengzhou, Henan 450016 (CN); XU, Zhenya, Zhengzhou, Henan 450016 (CN); XU, Yongyi, Zhengzhou, Henan 450016 (CN); ZHAO, Dongming, Zhengzhou, Henan 450016 (CN); HOU, Jianping, Zhengzhou, Henan 450016 (CN); WANG, Chao, Zhengzhou, Henan 450016 (CN); LIU, Cong, Zhengzhou, Henan 450016 (CN)
(74) Representative: V.O.
(86) International application number: PCT/CN2022/141640
(87) International publication number: WO 2023/125324

(57) **Abstract**

A double-layer rail apparatus and a method for transferring a sample holder, comprising: an upper-layer rail; along the conveying direction of the upper-layer rail, a detection mechanism is provided in the middle of the upper-layer rail; an upstream section (1-1) of the upper-layer rail is able to convey the sample holder to an input end of the detection mechanism, and the output end of the detection mechanism is able to convey the sample holder to a downstream section (1-2) of the upper-layer rail; a lower-layer rail (2), the lower-layer rail being arranged below the upper-layer rail, an output end of the downstream section of the upper-layer rail being able to convey the sample holder to an input end of the lower-layer rail, and the output end of the lower-layer rail being able to convey the sample holder to an input end of the upstream section of the upper-layer rail. After the sample holder is analyzed by the detection mechanism, the upper-layer rail conveys the empty sample holder to the lower-layer rail for buffering; the arrangement of the lower-layer rail increases the sample holder buffering capacity. Furthermore, the upper-layer rail and the lower-layer rail are arranged one above the other, so excessive space is not occupied.

## Description

The present application claims the priority of the Chinese Patent Application No. 202111646492.8, titled "DOUBLE-LAYER RAIL APPARATUS AND TRANSFER METHOD FOR TRANSFERRING A SAMPLE HOLDER", filed on December 29, 2021 with the China National Intellectual Property Administration and the priority of the Chinese Patent Application No. 202123385573.5, titled "DOUBLE-LAYER RAIL APPARATUS AND TRANSFER METHOD FOR TRANSFERRING A SAMPLE HOLDER", filed on December 29, 2021 with the China National Intellectual Property Administration, both of which are incorporated herein by reference in their entireties.

### FIELD

The present application relates to the technical field of automated operating line, and in particular to a double-layer track apparatus and a transfer method for transferring a sample holder.

### BACKGROUND

Nowadays, there is an increasing demand for a laboratory automated operating-line operation in the market. The laboratory automated operating-line operation can not only save time for testing and reporting, but also save manpower. If accelerating the testing of the laboratory automated operating-line operation is required, a sample temporary storing amount is needed to increase. If increasing the sample temporary storing amount is required, a length of a track is needed to increase. In existing laboratory automated operating-line operations, tracks used for conveying sample holders are mostly in type of a single-layer track, in other words, all tracks are located at the same level. Therefore, if the length of the track is increased, it may increase the occupied area. However, the laboratory always has a limited area, which cannot increase the length of the track as desired.

Therefore, how to increase the temporary store storing amount for samples to improve a testing speed while not taking up too much space is a key problem that those skilled in the art urgently need to solve.

### SUMMARY

A double-layer track apparatus is provided in the present application, which includes:
an upper track, and
a lower track,
along a conveying direction of the upper track, a testing unit is provided at a middle of the upper track, an upstream section of the upper track is configured to convey a sample holder to an input end of the testing unit, and an output end of the testing unit is configured to convey the sample holder to a downstream section of the upper track; and
the lower track is located below the upper track, the downstream section of the upper track is configure to convey the sample holder to an input end of the lower track, and an output end of the lower track is configured to convey the sample holder to an input end of the upper track.

In addition, a return track is provided on a side of the upper track, an input end of the return track is configured to be connected to the downstream section of the upper track, and an output end of the return track is configured to be connected to the upstream section of the upper track.

In addition, a tube-detection device is provided at an input end of the downstream section of the upper track, the tube-detection device is configured to detect whether there is a sample tube on the sample holder,
when the tube-detection device detects a sample tube on the sample holder, the downstream section of the upper track is connected to an input end of the return track;
when the tube-detection device detects that no sample tube is on the sample holder, the downstream section of the upper track is connected to an input end of the lower track.

In addition, the return track includes a first U-turn track, a return track body, and a second U-turn track, the first U-turn track is configured to connect the downstream section of the upper track with the return track body, and the second U-turn track is configured to connect the return track body with the upstream section of the upper track.

In addition, a first guiding unit is provided at the input end of downstream section of the upper track and located downstream the tube-detection device, and the first guiding unit is configured to guide the sample holder into the first U-turn track.

In addition, a second guiding unit is provided at an output end of the second U-turn track, the second guiding unit is configured to guide the sample holder on the second U-turn track to the upstream section of the upper track.

In addition, the double-layer track apparatus further includes a transferring device, the transferring device is configured to transfer the sample holder from the output end of the lower track to the input end of the upstream section of the upper track, or transfer the sample holder from the output end of the downstream section of the upper track to the input end of the lower track.

In addition, a lower output-end stop is provided at the output end of the lower track, an upper input-end stop is provided at the input end of the upstream section of the upper track, and an upper output-end stop is provided at the output end of the downstream section of the upper track.

In addition, the transferring device includes a first transferring device,
the first transferring device includes:
a pallet, which is provided with an opening to make the sample holder move in and move out, the sample holder is moved in and moved out of the opening under a conveyer power of the upper track of the lower track; and
a mobile unit, in which the pallet is connected to an output end of the mobile unit, the output end of the mobile unit is configured to conduct a movement between the output end of the lower track and the input end of the upstream section of the upper track or conduct a movement between the output end of the downstream section of the upper track and the input end of the lower track.

In addition, a diameter-reducing portion is formed in a middle of the sample holder, the opening of the pallet matches with the diameter-reducing portion of the sample holder, the pallet is provided with a holding slot in communication with the opening, and the holding slot is configured to hold the sample holder.

In addition, a bearing platform is provided in the holding slot, and an upper large-diameter portion of the sample holder is configured to be seated on the bearing platform.

In addition, the holding slot includes two or more holding slots, which are arranged on the pallet along a move-in or move-out direction of the sample holder, two adjacent holding slots are connected through a passage, and the passage matches with the diameter-reducing portion of the sample holder.

In addition, the mobile unit includes a horizontal mobile unit and a vertical mobile unit, the horizontal mobile unit is arranged on a horizontal base plate, and the vertical mobile unit is arranged on a vertical base plate, the pallet is connected to an output end of the vertical mobile unit, the vertical base plate is connected to an output end of the horizontal mobile unit, and the horizontal base plate is fixed to the fixed bracket.

In addition, the horizontal mobile unit includes a horizontal conveying belt, a first driving wheel, a first idle wheel, and a first motor, the horizontal conveying belt is wound around the first driving wheel and the first idle wheel, and the first driving wheel is driven by the first motor.

In addition, a horizontal guiding track is arranged on the horizontal base plate, a horizontal slider is connected to the vertical base plate, and the horizontal slider is configured to slidabl cooperate with the horizontal guiding track.

In addition, a horizontal position detector is provided on the horizontal base plate, the horizontal position detector is configured to detect whether the vertical mobile is in position after a horizontal movement of the vertical mobile unit driven by the first motor is ended and trigger an alarm when detecting that the vertical mobile unit is not in position.

In addition, the vertical mobile unit includes a vertical conveying belt, a second driving wheel, a second idle wheel, and a second motor, the vertical conveying belt is wound around the second driving wheel and the second idle wheel, and the second driving wheel is driven by the second motor.

In addition, a vertical guiding track is provided on the vertical base plate, a vertical slider is connected to the pallet, and the vertical slier is configured to slidably cooperate with the vertical guiding track.

In addition, a vertical position detector is provided on the vertical base plate,
the vertical position detector is configured to detect whether the pallet is in position after a vertical movement of the pallet driven by the second motor is ended and trigger an alarm when detecting that the pallet is not in position.

In addition, the transferring device includes a second transferring device, which includes:
a conveyer unit including a closed-loop conveyer member;
multiple carrying members, which are arranged along the conveyer member and connected to the conveyer member; and
a robotic arm configured to place the sample holder onto or remove the sample holder from the carrying members.

In addition, the conveyer unit includes:
a third motor;
a third driving wheel, which is driven to rotate by the third motor; and
a third idle wheel,
the third driving wheel and the third idle wheel are arranged vertically, and the conveyer member is wound around the third driving wheel and the third idle wheel.

In addition, the conveyer member is a conveying chain or a conveying belt.

In addition, the third driving wheel is located below the third idle wheel.

In addition, a limit guiding bar is provided inside a closed loop of the conveying chain and extends in a vertical direction, and the conveying chain is supported by a side of the limit guiding bar.

In addition, the carrying member includes a bearing plate and a protective plate, the protective plate is arranged on a side of the bearing plate, and an opening end is formed on a side of the bearing plate close to the upper track or the lower track.

In addition, an outwards bevel is provided on a portion of the protective plate located at the opening end.

In addition, the carrying member further includes a connecting plate, the connecting plate is located on a side away from the opening end and located on a side opposite to the protective plate on the bearing plate, an auxiliary plate is provided on the conveyer member and is connected to the connecting plate through bolts.

In addition, the robotic arm includes a first automatic push rod, which is arranged on a support frame of the second transferring device, the first automatic push rod is configured to push the sample holder on the bearing plate to the input end of the lower track or to the input end of the upper track.

In addition, the robotic arm further includes a second automatic push rod, which is arranged on the lower track or the upper track, the second automatic push rod is configured to push the sample holder at the output end of the lower track or the sample holder at the output end of the downstream section of the upper track to the corresponding bearing plate.

A transferring method for transferring sample holders is provided in the present application, including a method for transferring a sample holder from a lower track to an upper track, where the method for transferring a sample holder from a lower track to an upper track includes the following steps:
S1: determining whether there is a sample holder at a lower output-end stop, and if yes, moving to step S2,
S2: determining whether a transferring device is in an idle condition, and if yes, moving to step S3,
S3: determining whether an upper input-end stop is in a full state, and if no, moving to step S4,
S4: the transferring device receiving the sample holder,
S5: determining whether there is a second sample holder at the lower output-end stop, if no, moving to step S8, and if yes, moving to step S6,
S6: determining whether it is sufficient to accommodate two sample holders at the upper input-end stop, if no, moving to step S8, and if yes, moving to step S7,
S7: the transferring device receiving a second sample holder,
S8: the transferring device lifting the sample holder to the upper track,
S9: the transferring device returning back to the lower track.

In an embodiment, the transferring method further includes a method of transferring the sample holder from the upper track to the lower track, where the method of transferring the sample holder from the upper track to the lower track includes the following steps:
T1: determining whether there is a sample holder at a tube-detection device, and if yes, moving to step T2,
T2: the tube-detection device detecting whether there is a sample tube on the sample holder, if yes, moving to step T3; and if no, moving to step T4,
T3: transferring the sample holder back to the testing unit,
T4: determining whether the upper output-end stop is in a full state, and if no, moving to step T5,
T5: releasing the sample holder to the upper output-end stop,
T6: determining whether the transferring device is in an idle condition, and if yes, moving to step T7,
T7: the transferring device receiving the sample holder,
T8: determining whether there is a more sample holder at the upper output-end stop, if yes, moving to step T9; and if no, moving to step T10,
T9: the transferring device receiving another sample holder,
T10: the transferring device transferring the another sample holder to the lower track,
T11: the transferring device returning back to the upper track.

As can be seen from the above technical solutions, the upper track conveys an empty sample holder tested by the testing unit to the lower track for a temporary store. The lower track is provided to increase the temporary storing amount for the sample holder. Meanwhile, due to the fact that the upper and lower tracks are arranged vertically, they do not occupy too much space. In addition, the track device of the present invention includes two cycles, which can ensure the sample on the sample holder sequentially to receive different testing processes of the testing units, and also ensure the empty sample holder tested by the testing unit to be continuously temporarily stored in the lower track.

### BRIEF DESCRIPTION OF THE DRAWINGS

In order to clearly describe embodiments of the present application or technical solutions in the conventional technology, a brief introduction is made to the accompanying drawings in the embodiments or conventional technology. Apparently, the accompanying drawings in the following description are only some embodiments of the present application. For those skilled in the art, other accompanying drawings can be also obtained based on these drawings without paying a creative work.
FIG. 1 is a schematic view of an upstream section of an upper track and a part of return track in an embodiment of the present application;
FIG. 2 is an enlarged view of the upstream section and the part of return track of the upper track in an embodiment of the present application;
FIG. 3 is a schematic structural view of a lower track in an embodiment of the present application;
FIG. 4 is a top view of a double-layer track apparatus in an embodiment of the present application;
FIG. 5 is a schematic structural view of a first transferring device in an embodiment of the present application;
FIG. 6 is a schematic structural view of a pallet in an embodiment of the present application;
FIG. 7 is a schematic structural view of the pallet and a sample holder in an embodiment of the present application;
FIG. 8 is a schematic structural view of a second transferring device in an embodiment of the present application;

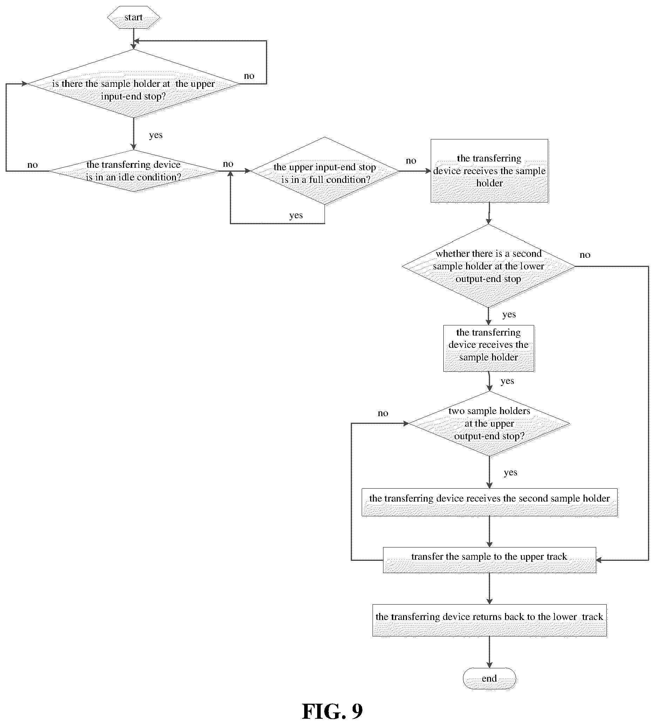

FIG. 9 is a flow chart of a transferring process of transferring the sample holder from the lower track to the upper track in an embodiment of the present application;

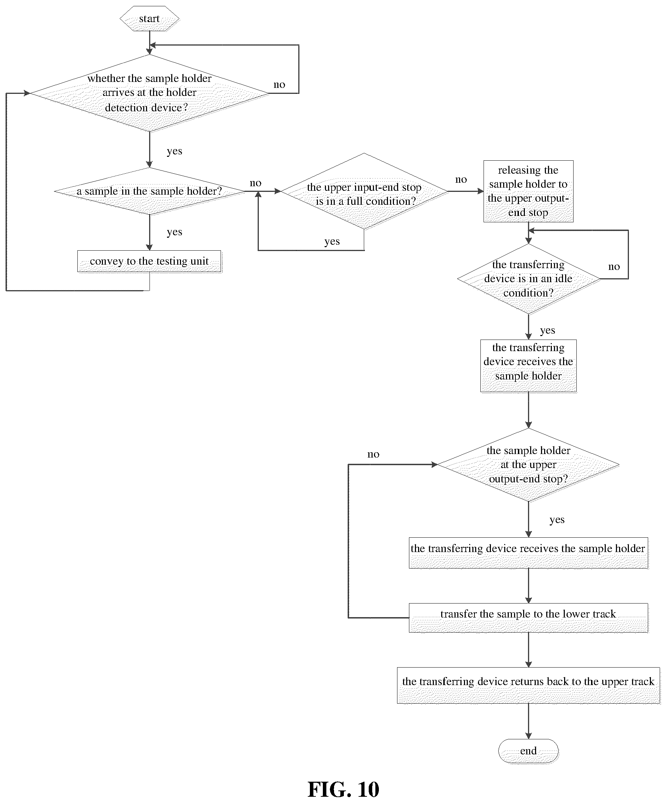

FIG. 10 is a flow chart of a transferring process of transferring the sample holder from the upper track to the lower track in an embodiment of the present application.

**Numeral References:**

| | | | |
|---|---|---|---|
| 1-1 | upstream section of upper track, | 1-2 | downstream section of upper track, |
| 2 | lower track, | 3 | return track, |
| 3-1 | first U-turn track, | 3-2 | return track body, |
| 3-3 | second U-turn track, | 4-1 | first guiding unit, |
| 4-2 | second guiding unit, | 5 | first transferring device, |
| 5-1 | horizontal base plate, | 5-2 | horizontal conveying belt, |
| 5-3 | horizontal guiding track, | 5-4 | horizontal position detector, |
| 5-5 | first motor, | 5-6 | vertical base plate, |
| 5-7 | vertical guiding track, | 5-8 | vertical conveying belt, |
| 5-9 | vertical position detector, | 5-10 | second motor |
| 6-1 | conveying chain, | 6-2 | bearing plate, |
| 6-3 | side protective plate, | 6-4 | back protective plate, |
| 6-5 | connecting plate, | 6-6 | support frame, |
| 7-1 | pallet, | 7-2 | opening, |
| 7-3 | holding slot, | 7-4 | passage, |
| 7-5 | bearing platform, | 7-6 | upper large-diameter portion. |

### DETAILED DESCRIPTION OF THE EMBODIMENTS

The present application discloses a double-layer track apparatus, which can increase a temporary storing amount for samples to improve a testing speed while not taking up too much space.

The following provides a clear and complete description of the technical solution in the embodiments of the present application in conjunction with the accompanying drawings. Obviously, the described embodiments are only a part of the embodiments of the present application not all of them. Based on the embodiments in the present application, all other embodiments obtained by those skilled in the art without paying creative work fall within the scope of the present application.

A double-layer track apparatus is provided in the present application, which includes an upper track and a lower track 2. The upper track is used to convey samples (conveying sample holders). The lower track 2 is located below the upper track. Along a conveying direction of the upper track, a testing unit is provided at a middle of the upper track. The upper track is divided into an upstream section 1-1 and a downstream section 1-2 by the testing unit. The upstream section 1-1 of the upper track is configured to convey the sample holder to an input end of the testing unit, and an output end of the testing unit is configured to convey the sample holder to the downstream section 1-2 of the upper track. The downstream section 1-2 of the upper track is configure to convey the sample holder to an input end of the lower track 2, and an output end of the lower track 2 is configured to convey the sample holder to an input end of the upper track. When entering the testing unit, the sample holder suffers a series of steps including laying off, testing, sampling and so on.

In the present application, the upper track conveys an empty sample holder tested by the testing unit to the lower track 2 for a temporary storing. The lower track 2 is provided to increase a temporary storing amount for the sample holder. Meanwhile, the upper track and the lower track 2 are arranged vertically, which do not occupy too much space.

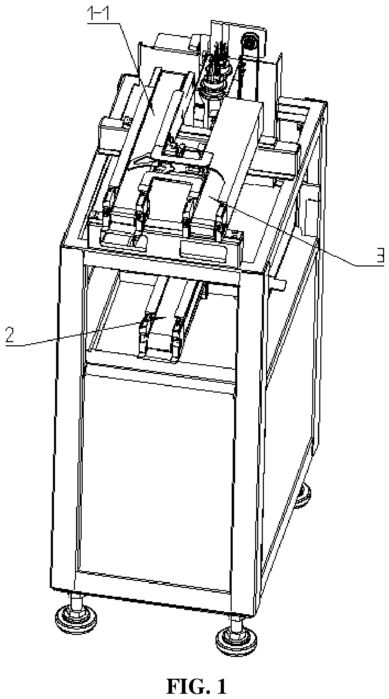

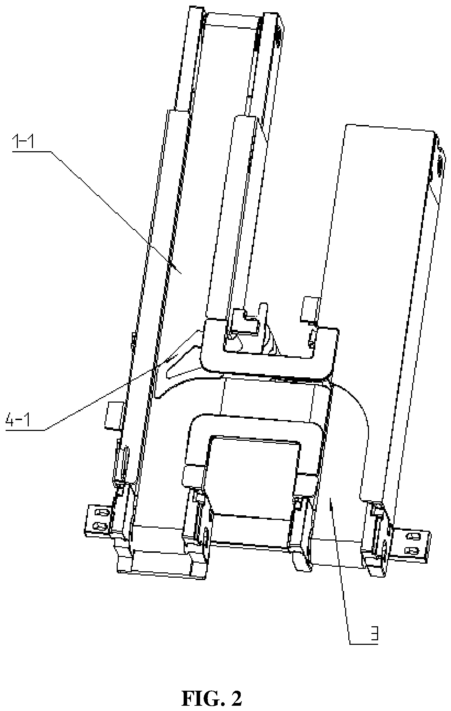

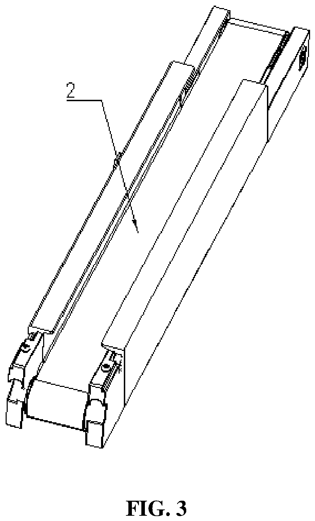

Referring to FIG. 1 to FIG. 4, the double-layer track apparatus further includes a return track. An input end of the return track can be connected to the downstream section 1-2 of the upper track, and an output end of the return track can be connected to the upstream section 1-1 of the upper track. A tube-detection device is provided at an input end of the downstream section 1-2 of the upper track and is used to detect whether there is a sample tube on the sample holder.

When the upstream section 1-1 of the upper track conveys the sample holder to the testing unit, the testing unit first lays off the sample holder (placing the sample tube), and then tests the sample inside the sample tube. If the test is completed, the sample tube on the sample holder is removed, and the sample holder becomes an empty holder. The empty sample holder is conveyed to the input end of the downstream section 1-2 of the upper track.

At the input end of downstream section 1-2 of the upper track, the tube-detection device is configured to detect the sample holder. If no sample tube is detected on the sample holder, it indicates that the sample holder is empty. Then, the downstream section 1-2 of the upper track is connected to the lower track 2, and the sample holder is conveyed to the lower track 2. If a sample tube is detected on the sample holder, it indicates that the sample holder needs to be sent back to the testing unit for testing. In that case, the downstream section 1-2 of the upper track is connected to a U-turn track. The sample holder enters the upstream section 1-1 of the upper track again through the U-turn track, and is then conveyed into the testing unit. This cycle is repeated until no sample tube is detected on the sample holder.

In the present application, a first cycle of the sample holder can be completed by the upstream section 1-1 of the upper track, the testing unit, the downstream section 1-2 of the upper track, and the return track 3. In the first cycle, the sample holder undergoes testing, return, and re-testing in sequence. The first cycle can ensure the samples on the sample holder to sequentially undergo different testing procedures by the testing unit. A second cycle in the present application can be completed by the upstream section 1-1 of the upper track, the testing unit, the downstream section 1-2 of the upper track, and the lower track 2. In the second cycle, the sample holder can undergo laying off, testing, conveying to the lower track 2, and laying off in sequence. With this configuration, empty holders can be continuously temporarily stored to the lower track 2. The empty holders temporarily stored to the lower track 2 are continuously transferred to the upstream section 1-1 of the upper track. As such, an operating-line operation is formed.

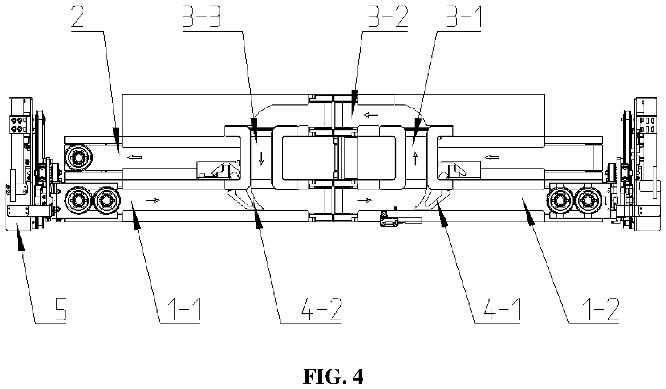

Referring to FIG. 4, regarding the return track 3, it specifically includes a first U-turn track 3-1, a return track body 3-2, and a second U-turn track 3-3. The first U-turn track 3-1 is used to convey samples on the downstream section 1-2 of the upper track to the return track body 3-2. The second U-turn track 3-3 can convey the samples from the return track body 3-2 to the upstream section 1-1 of the upper track, and then the upstream section 1-1 of the upper track conveys the samples to the testing unit. In this embodiment, the first U-turn track 3-1 is used to connect the downstream section 1-2 of the upper track with the return track body 3-2, and the second U-turn track 3-3 is used to connect the return track body 3-2 with the upstream section 1-1 of the upper track.

In the present application, a first guiding unit 4-1 is provided at the input end of downstream section 1-2 of the upper track. When the tube-detection device detects a sample tube on the sample holder, the first guiding unit 4-1 is activated to implement a guiding action from the downstream section 1-2 of the upper track to the first U-turn track 3-1. As such, the sample holder conveyed to the input end of downstream section 1-2 of the upper track is guided to move in the first U-turn track 3-1 by the first guiding unit 4-1, and is then conveyed to the return track body 3-2 by the first U-turn track 3-1.

In the present application, a second guiding unit 4-2 is provided at an output end of the second U-turn track 3-3. The second guiding unit 4-2 is used to guide the sample holder on the second U-turn track 3-3 into the upstream section 1-1 of the upper track.

It should be noted that the tube-detection device includes a photoelectric sensor, which determines whether there is a sample tube on the sample holder.

Regarding how to transfer the sample holder from the lower track 2 to the upstream section 1-1 of the upper track and how to transfer the sample holder from the downstream section 1-2 of the upper track to the lower track 2, a transferring device is provided in the present application. The transferring device can transfer the sample holder from the output end of the lower track 2 to the input end of the upstream section 1-1 of the upper track, or the transferring device can transfer the sample holder from the output end of the downstream section 1-2 of the upper track to the input end of the lower track 2.

In the present application, an upper input-end stop is further provided at the input end of the upper track, that is, the upper input-end stop is provided at the input end of upstream section 1-1 of the upper track. The upper input-end stop is used to control whether the upper track receives a new sample holder. If the upper track is in a full state, the upper input-end stop closes the upper track to prevent additional sample holders from moving in. An upper output-end stop is further provided in the present application, in other words, the upper output-end stop is provided at the upper output end of downstream section 1-2 of the upper track, so as to prevent samples on the upper track from being moved out casually. In the present application, a lower output-end stop is further provided at the output end of the lower track 2 to prevent the sample holder in the lower track 2 from being moved out casually.

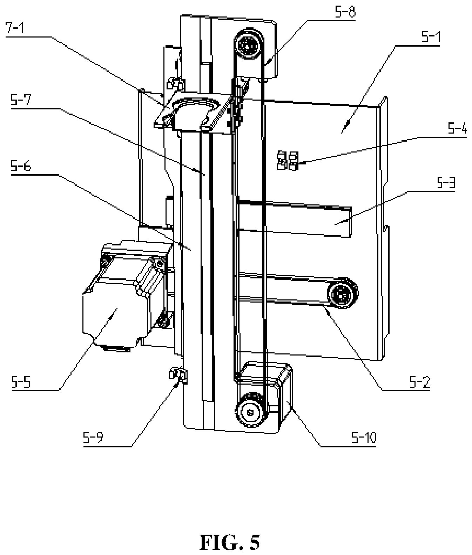

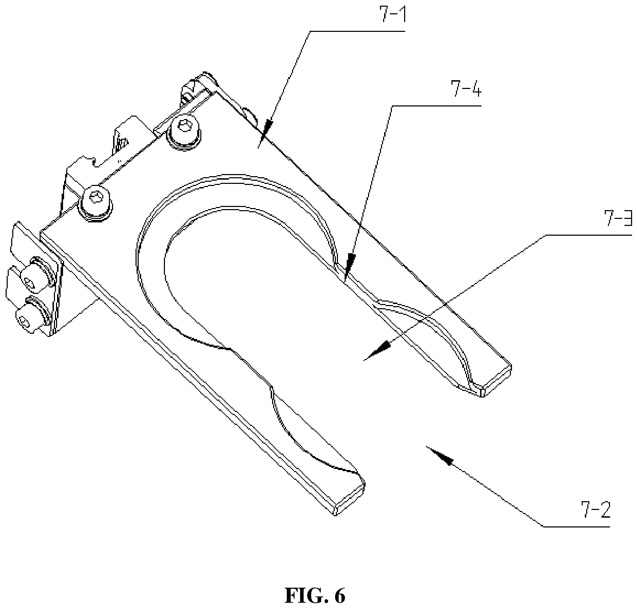

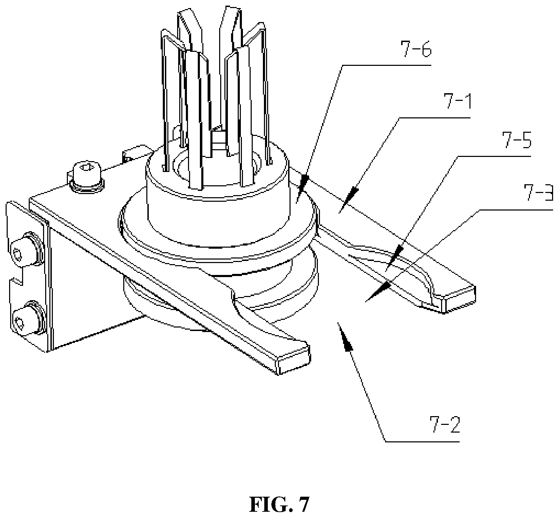

Two transferring devices are provided in the present application, namely the first transferring device 5 and the second transferring device. The first transferring device 5 is described first. Referring to FIG. 5 to FIG. 7, the first transferring device 5 includes a pallet 7-1 and a mobile unit. The pallet 7-1 has an opening 7-2 to make the sample move in and out. An output end of the mobile unit can conduct a movement between the output end of the lower track 2 and the input end of the upstream section 1-1 of the upper track, in other words, it can conduct a movement between the output end of the downstream section 1-2 of the upper track and the input end of the lower track 2. The pallet 7-1 is connected to the output end of the mobile unit.

If the first transferring device 5 is located at the input end of the upstream section 1-1 of the upper track, the pallet 7-1 transfers the sample holder from the lower track 2 to the upstream section 1-1 of the upper track. A moving process of the pallet 7-1 is as follows: the pallet 7-1 is first positioned at the output end of the lower track 2, and after the lower track 2 conveys the sample holder in the pallet 7-1, the pallet 7-1 is driven by the mobile unit to move to the input end of the upstream section 1-1 of the upper track. Then, the sample holder is driven by the upstream section 1-1 of the upper track to move in the upstream section 1-1 of the upper track. Afterwards, the holder 7-1 returns back along the original path and is positioned at the output end of the lower track 2 again in order to transfer the next sample holder.

If the first transferring device 5 is located at the output end of downstream section 1-2 of the upper track, the pallet 7-1 transfers the sample holder from the output end of downstream section 1-2 of the upper track to the input end of the lower track 2. The moving process of the pallet 7-1 is as follows: the pallet 7-1 is first positioned at the output end of the downstream section 1-2 of the upper track. After the downstream section 1-2 of the upper track conveys the sample holder in the pallet 7-1, the pallet 7-1 is driven by the mobile unit to move to the input end of the lower track 2. Then, the sample holder in the pallet 7-1 is driven by the lower track 2 to move in the lower track 2. Afterwards, the holder 7-1 returns back to the output end of downstream section 1-2 of the upper track along the original path, standing by for the next sample holder.

Regarding how to make the sample holder in the pallet 7-1 move out the pallet 7-1 and move in the upstream section 1-1 of the upper track or the lower track 2 and to make the sample holder on the downstream section 1-2 of the upper track or the lower track 2 to move in the pallet 7-1, the following solution is further provided in the present application: firstly, the sample holder in the present application is substantially cylindrical, and a diameter-reducing portion is formed in the middle of the sample holder. An upper large-diameter portion 7-6 is formed above the diameter-reducing portion, and the lower large-diameter portion is formed below. The opening 7-2 of the pallet 7-1 matches with the diameter-reducing portion of the sample holder, that is, the diameter-reducing portion can move in and move out of the opening 7-2. The pallet 7-1 also has a holding slot 7-3, which is in communication with the opening 7-2 and can hold the sample holder. Furthermore, the present application also provides a bearing platform 7-5 in the holding slot 7-3, and a lower end face of the upper large-diameter portion 7-6 of the sample holder can be seated on the bearing platform 7-5.

It should be noted that the return track body 3-2 is substantially parallel to the upstream section 1-1 of the upper track, that is, parallel to the downstream section 1-2 of the upper track. The lower track 2 is preferably located between the upstream section 1-1 of the upper track and the return track body 3-2. In other words, the lower track 2 is misaligned with the upper track. The movement conducted by the output end of the mobile unit includes a horizontal movement and a vertical movement.

If the first transferring device 5 is located on a side of the input end of the upstream section 1-1 of the upper track, the pallet 7-1 is initially positioned above the output end of the lower track 2, and the opening 7-2 of the pallet 7-1 is arranged facing the diameter-reducing portion of the sample holder. As the sample holder is conveyed by the lower track 2, the diameter-reducing portion of the sample holder is moved into the holding slot 7-3 through the opening 7-2. Then, the sample holder is driven by the mobile unit to move upward, and the sample holder is adaptively self-adjusted to make the upper large-diameter portion 7-6 of the sample holder be seated on the bearing platform 7-5. As such, it not only implements a clamping on the sample holder, but also implements a limiting on the sample holder, which ensures the sample holder to be stably located in the holding slot 7-3. When the pallet 7-1 is lifted to a certain height beyond the upstream section 1-1 of the upper track, the mobile unit drives the pallet 7-1 to move horizontally until the pallet 7-1 is located above the upstream section 1-1 of the upper track. At this time, a bottom of the sample holder inside the pallet 7-1 is just located on the upstream section 1-1 of the upper track while the diameter-reducing portion is just arranged facing the opening 7-2 of the pallet 7-1. Under a conveying action of the upstream section 1-1 of the upper track, the sample holder slides out of the pallet 7-1 through the opening 7-2. Afterwards, the pallet 7-1 returns back along the original route driven by the mobile unit.

If the first transferring device 5 is located on a side of the output end of the downstream section 1-2 of the upper track, the movement process of the pallet 7-1 is similar to that of the input side of the upstream section 1-1 of the upper track, which is not repeated.

It should be noted that the holding slot 7-3 in the pallet 7-1 can comprises two or more holding slots. Two or more holding slots 7-3 are arranged on the pallet along a moving direction of the sample holder. The two adjacent holding slots 7-3 are connected through a passage 7-4. Taking the first transferring device 5 located on the side of the input end of the upstream section 1-1 of the upper track as an example, if the pallet is positioned above the output end of the lower track 2, as being conveyed by the lower track 2, the first sample holder is moved in the holding slot 7-3 through the opening 7-2. As being further conveyed by the lower track 2, the first sample holder is gradually moved in the innermost holding slot 7-3, in other words, enters the holding slot 7-3 farthest from the lower track 2. Afterwards, the second sample enters the second innermost holding slots 7-3 and the third sample holder enters the third innermost holding slots 7-3 in sequence. When being transferred above the input end of the upstream section 1-1 of the upper track by the pallet 7-1, the sample holders slide out of the pallet 7-1 in sequence under the conveying action of the upstream section 1-1 of the upper track. The configuration of providing multiple holding slots 7-3 improves the transferring efficiency.

The specific structure of the mobile unit is then described. The mobile unit includes a horizontal mobile unit and a vertical mobile unit. The horizontal mobile unit is arranged on the horizontal base plate 5-1, and the vertical mobile unit is arranged on the vertical base plate 5-6. The vertical base plate 5-6 is connected to the output end of the horizontal mobile unit. The horizontal base plate 5-1 is arranged on the fixed bracket.

The horizontal mobile unit includes a horizontal conveying belt 5-2, a first driving wheel, a first idle wheel, and a first motor 5-5. The horizontal conveying belt 5-2 is wound around the first driving wheel and the first idle wheel. The first driving wheel is driven by the first motor 5-5. The first driving wheel, the first idle wheel, and the first motor 5-5 are all arranged on the horizontal base plate 5-1. The vertical base plate 5-6 is connected to the horizontal conveying belt 5-2.

Furthermore, a horizontal guiding track 5-3 is arranged on the horizontal base plate 5-1, and a horizontal slider is connected to the vertical base plate 5-6. The horizontal slider is configured to slidably cooperate with the horizontal guiding track. As such, the vertical base plate 5-6 is moveable along the horizontal guiding track 5-3 under a driving action of the horizontal conveying belt 5-2. The horizontal movement of the vertical base plate 5-6 also represents a horizontal movement of the vertical mobile units.

In the present application, in order to ensure the vertical mobile unit to be in position during a horizontal movement and thus guarantee a smooth transfer of the sample holder, a horizontal position detector 5-4 is provided on the horizontal base plate 5-1. When the horizontal movement of the vertical mobile unit driven by the first motor 5-5 is ended, the horizontal position detector 5-4 detects whether the vertical mobile unit is in position. If the horizontal position detector 5-4 detects that the vertical mobile unit is in position, a controller controls the transferring device to implement subsequent actions. If the horizontal position detector 5-4 detects that the vertical mobile unit is not in position, the horizontal position detector 5-4 triggers an alarm and the operation of the transferring device is suspended.

For example, during the process of transferring the sample holder from the lower track 2 to the upstream section 1-1 of the upper track by the pallet 7-1, after the pallet 7-1 is moved from the lower track 2 to a certain height, the first motor 5-5 controls the vertical mobile unit, in other words, controls the pallet 7-1 to move horizontally. When the first motor 5-5 finishes the driving action, the horizontal position detector 5-4 detects whether the vertical mobile unit, or in other words, the vertical base plate 5-6 is in position. If the movement is in position, the controller controls the first motor 5-5 or the second motor 5-10 to implement subsequent actions. If it is detected that the vertical mobile unit is not in position, the operations of the first motor 5-5 and the second motor 5-10 are suspended and an alarm is triggered.

The vertical mobile unit includes a vertical conveying belt, a second driving wheel, a second idle wheel, and a second motor. The vertical conveying belt is wound around the second driving wheel and the second idle wheel. The second driving wheel is driven by the second motor 5-10, and the second driving wheel, the second idle wheel, and the second motor are all arranged vertically on the vertical base plate 5-6.

Furthermore, in the present application, a vertical guiding track 5-7 is further provided on the vertical base plate 5-6. A vertical slider is connected to the pallet 7-1 and configured to slidably cooperate with the vertical guiding track 5-7. The pallet 7-1 is driven by the vertical conveying belt to slide up and down along the vertical guiding track 5-7.

In the present application, in order to ensure the pallet 7-1 to be in position during a vertical movement and thus guarantee a smooth transfer of the sample holder, a vertical position detector 5-9 is provided on the vertical base plate 5-6. When the vertical movement of the pallet 7-1 driven by the second motor 5-10 is ended, the vertical position detector 5-9 detects whether the pallet 7-1 is in position. If the vertical position detector 5-9 detects that the pallet 7-1 is in position, the controller controls the transferring device to implement subsequent actions. If the vertical position detector 5-9 detects that the pallet 7-1 is not in position, the vertical position detector 5-9 triggers an alarm and the operation of the transferring device is suspended.

For example, during the process of transferring the sample holder from the lower track 2 to the input end of the upstream section 1-1 of the upper track by the pallet 7-1, after the vertical movement of the pallet 7-1 driven by the second motor 5-10 is ended, the vertical position detector 5-9 detects whether the pallet 7-1 is in position. If the pallet 7-1 is in position, the controller controls the first motor 5-5 or the second motor 5-10 to implement subsequent actions. If the vertical position detector 5-9 detects that the pallet 7-1 is not in position, an alarm is triggered and the controller controls the first motor 5-5 or the second motor 5-10 to suspend the operation.

The above is the description to the first transferring device 5. The second transferring device is descried below.

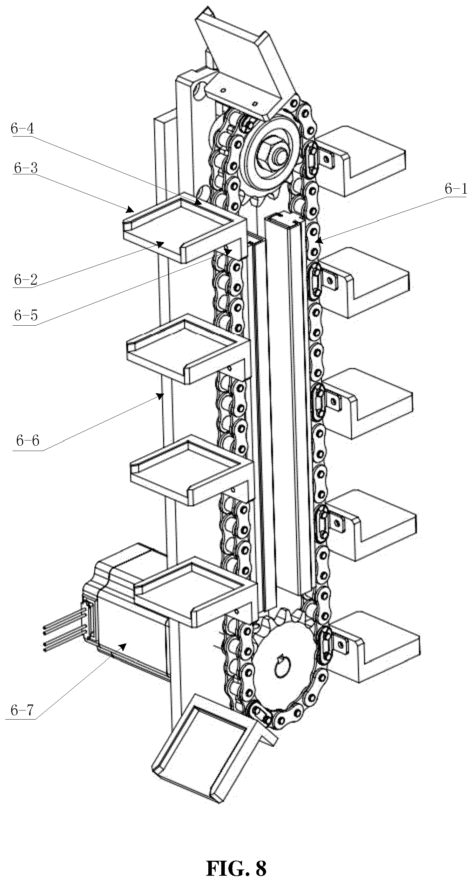

Referring to FIG. 8, the second transferring device includes: a conveyer unit, a carrying member, and a robotic arm. The conveyer unit includes a closed-loop conveyer member, which is arranged vertically. The carrying member includes multiple carrying members, which are arranged along the conveyer member and connected to the conveyer member. The robotic arm is used to place sample holders onto or remove sample holders from the carrying members.

For example, in the process of transferring the sample holder from the output end of the lower track 2 to the input end of the upstream section 1-1 of the upper track, when one carrying member on the conveyer member is just moved to a position of the output end of the lower track 2, the robotic arm grips the sample holder from the output end of the lower track 2 and places it on the carrying member, and then the robotic arm returns back. The carrying member is being moved upward along with the conveyer unit. When the carrying member is moved to the input end of the upstream section 1-1 of the upper track, the robotic arm grips the sample holder on the carrying member, and then places it on the input end of the upstream section 1-1 of the upper track, and then the robotic arm returns back. The carrying member is rotated along with the conveyer member. When being rotated with the conveyer member for one cycle, the carrying member is moved back to the output end of the lower track 2.

It should be noted that due to the fact that multiple carrying members are provided on the conveyer unit, when one carrying member receives the sample holder and then leaves the lower track 2, the next carrying member is immediately moved to the output end of the lower track 2. As such, multiple carrying members transfer the sample holder in sequence. Apparently, the arrangement of multiple carrying members in this embodiment can greatly improve the transfer efficiency of the sample holder.

The conveyer unit includes: a third motor, a third driving wheel, and a third idle wheel. The third motor drives the third driving wheel to rotate. The third driving wheel and the third idle wheel are arranged vertically, and the conveyer member is wound around the third driving wheel and the third idle wheel. The conveyer member can specifically be a conveying chain 6-1 or a conveying belt. If the conveyer member is a conveying chain 6-1, the third driving wheel and the third idle wheel are both sprockets.

It should be noted that in the present application, in order to facilitate configuration, the third driving wheel is located below the third idle wheel. The third motor for driving the third driving wheel is also located below the third idle wheel.

In order to ensure a stable movement of the carrying member on the conveying chain 6-1 in a vertical direction and thus ensure a stability of the sample holder on the carrying member, the following solutions are provided in the present application: a limit guiding bar is provided in the closed loop of the conveying chain 6-1 and extends in the vertical direction. The conveying chain 6-1 is supported by a side of the limit guiding bar so as to prevent the conveying chain 6-1 from being bent inward.

Further, the carrying member is described as follow. The carrying member includes a bearing plate 6-2 and a protective plate. The protective plate is arranged on a side of the bearing plate 6-2. The bearing plate 6-2 is used to support the sample holder, and the protective plate is used to protect the sample holder. An opening end is formed on a side of the bearing plate 6-2 close to the upper track or the lower track 2. The sample holder moves in or moves out the bearing plate 6-2 through the opening end. In the present application, in order to facilitate the sample holder moving in and moving out, an outwards bevel is provided on a portion of the protective plate located at the opening end.

In addition to the bearing plate 6-2, the carrying member further includes a connecting plate 6-5. The connecting plate 6-5 is located on a side away from the opening end and located on a side opposite to the protective plate on the bearing plate 6-2. That is, the protective plate on the bearing plate 6-2 includes two side protective plates 6-3 and one back protective plate 6-4. The connecting plate 6-5 is located below the back protective plate 6-4, and the connecting plate 6-5 and the back protective plate 6-4 are separately arranged on opposite sides of the bearing plate 6-2. An auxiliary plate is provided on the conveyer member, which is connected to the connecting plate 6-5 through bolts. As such, it facilitates the connection between the carrying member and the conveyer unit.

Regarding the robotic arm, the robotic arm includes a first automatic push rod, which is arranged on a support frame 6-6 of the second transferring device. When being extended, the first automatic push rod can push the sample holder on the bearing plate 6-2 to the input end of the lower track 2 or to the input end of the upper track. For example, in a process of transferring the sample holder from the output end of the downstream section 1-2 of the upper track to the input end of the lower track 2, when the carrying member carrying the sample holder is moved to the input end side of the lower track 2, the first automatic push rod is extended to push the sample holder on the carrying member into the lower track 2.

For another example, in a process of transferring the sample holder from the output end of the lower track 2 to the input end of the upstream section 1-1 of the upper track, when the carrying member carrying the sample holder is moved to the input end of the upstream section 1-1 of the upper track, the first automatic push rod is extended to push the sample holder on the carrying member into the upstream section 1-1 of the upper track. The robotic arm is in the form of an automatic push rod, which facilitates the configuration and can be operated easily.

The robotic arm further includes a second automatic push rod, which is arranged on the lower track 2 or the upper track. Specifically, the second automatic push rod is provided on the fixed body of the upper track or of the lower track 2. The second automatic push rod can push the sample holder at the output end of the lower track 2 or the sample holder at the output end of the upper track to the corresponding bearing plate 6-2. For example, in a process of transferring the sample holder from the output end of the lower track 2 to the input end of the upstream section 1-1 of the upper track, when one of the carrying members is moved to the output end of the lower track 2, the second automatic push rod is extended to push the sample holder on the lower track 2 into the carrying member. For another example, in a process of transferring the sample holder from the output end of downstream section 1-2 of the upper track to the input end of the lower track 2, when one of the carrying members is moved to the output end of the downstream section 1-2 of the upper track, the second automatic push rod is extended to push the sample holder at the downstream section 1-2 of the upper track into the carrying member.

A transferring method for transferring sample holders is further provided in the present application, including a method for transferring sample holders from the lower track to the upper track. The method includes the following steps:
S1: determining whether there is a sample holder at the lower output-end stop. If yes, move to step S2.
S2: determining whether the transferring device is in an idle condition. If yes, move to step S3.
S3: determining whether the upper input-end stop is in a full state. If no, move to step S4.
S4: receiving the sample holder by the transferring device.
S5: determining whether there is a second sample holder at the lower output-end stop. If no, move to step S8; and if yes, moving to step S6.
S6: determining whether two sample holders can be accommodated at the upper input-end stop. If no, move to step S8; and if yes, move to step S7.
S7: the transferring device receiving the second sample holder.
S8: the transferring device lifting the sample holder to the upper track.
S9: the transferring device returning back to the lower track.

The transferring method of transferring the sample holder in the present application further includes a method of transferring the sample holder from the upper track to the lower track, which specifically comprises:
T1: determining whether there is a sample holder at the holder detection device. If yes, moving to step T2. The holder detection device, which is arranged downstream of the testing device, is used to detect the sample holder conveyed from the testing device.
T2: the holder detection device detecting whether there is a sample holder on the sample holder. If yes, move to step T3; and if no, moving to step T4.
T3: transferring the sample holder back to the testing unit.
T4: determining whether the upper output-end stop is in a full state, if no, moving to step T5.
T5: releasing the sample holder to the upper output-end stop.
T6: determining whether the transferring device is in an idle condition. If yes, move to step T7.
T7: the transferring device receiving the sample holder.
T8: determining whether there is still a sample holder at the upper output-end stop. If yes, moving to step T9; and if no, moving to step T10. Due to the fact that the releasing operation of the sample holder at the holder detection device and the receiving operation of the sample holder by the transferring device are implemented synchronously, it is highly likely that another sample holder is just moved to the upper output-end stop at the time that the transferring device receives one sample holder. Therefore, after receiving the sample holder in the transferring device, determine whether there is a new sample holder at the upper output-end stop.
T9: the transferring device receiving the second sample holder.
T10: the transferring device transferring the sample holder to the lower track.
T11: the transferring device returning back to the upper track.

It should be noted that the terms "comprise", "include", or any other variant thereof are intended to encompass a non-exclusively inclusion, such that a process, a method, an item, or an equipment that includes a series of elements not only includes those elements, but also other elements that are not explicitly listed, or also includes elements inherent to the process, the method, the item, or the equipment. Without further limitations, the elements limited by the expression "including one..." do not exclude the existence of other identical elements in the process, the method, the item, or the equipment that includes said elements.

The various embodiments in the present application are described in a progressive manner, and each embodiment focuses on the differences from other embodiments. The same and similar parts between each embodiment can be referred to each other.

The above explanation of the disclosed embodiments enables those in the art to implement or apply the present application. The various modifications to these embodiments will be apparent to those in the art, and the general concept defined in the present application can be implemented in other embodiments without departing from the spirit or scope of the present application. Therefore, the present application will not be limited to the embodiments shown herein, but will conform to the widest range consistent with the concept and novel features disclosed herein.

## Claims

1. A double-layer track apparatus, comprising:
an upper track, wherein along a conveying direction of the upper track, a testing unit is provided at a middle of the upper track, an upstream section of the upper track is configured to convey a sample holder to an input end of the testing unit, and an output end of the testing unit is configured to convey the sample holder to a downstream section of the upper track;
a lower track located below the upper track, wherein the downstream section of the upper track is configure to convey the sample holder to an input end of the lower track, and an output end of the lower track is configured to convey the sample holder to an input end of the upper track.

2. The double-layer track apparatus according to claim 1, wherein a return track is provided on a side of the upper track, an input end of the return track is configured to be connected to the downstream section of the upper track, and an output end of the return track is configured to be connected to the upstream section of the upper track.

3. The double-layer track apparatus according to claim 2, wherein a tube-detection device is provided at an input end of the downstream section of the upper track, the tube-detection device is configured to detect whether there is a sample tube on the sample holder,
when the tube-detection device detects a sample tube on the sample holder, the downstream section of the upper track is connected to the input end of the return track; and
when the tube-detection device detects that no sample tube is on the sample holder, the downstream section of the upper track is connected to the input end of the lower track.

4. The double-layer track apparatus according to claim 3, wherein the return track comprises a first U-turn track, a return track body, and a second U-turn track,
the first U-turn track is configured to connect the downstream section of the upper track with the return track body, and the second U-turn track is configured to connect the return track body with the upstream section of the upper track.

5. The double-layer track apparatus according to claim 4, wherein a first guiding unit is provided at the input end of downstream section of the upper track and located downstream the tube-detection device, and the first guiding unit is configured to guide the sample holder into the first U-turn track.

6. The double-layer track apparatus according to claim 5, wherein a second guiding unit is provided at an output end of the second U-turn track, and the second guiding unit is configured to guide the sample holder on the second U-turn track to the upstream section of the upper track.

7. The double-layer track apparatus according to claim 1, further comprising a transferring device, wherein the transferring device is configured to transfer the sample holder from the output end of the lower track to the input end of the upstream section of the upper track, or transfer the sample holder from the output end of the downstream section of the upper track to the input end of the lower track.

8. The double-layer track apparatus according to claim 7, wherein a lower output-end stop is provided at the output end of the lower track,
an upper input-end stop is provided at the input end of the upstream section of the upper track, and an upper output-end stop is provided at the output end of the downstream section of the upper track.

9. The double-layer track apparatus according to claim 8, wherein the transferring device comprises a first transferring device,
the first transferring device comprises:
a pallet, which is provided with an opening to make the sample holder move in and move out, the sample holder is moved in and is moved out the opening under a conveyer power of the upper track of the lower track; and
a mobile unit, wherein the pallet is connected to an output end of the mobile unit, the output end of the mobile unit is configured to conduct a movement between the output end of the lower track and the input end of the upstream section of the upper track or conduct a movement between the output end of the downstream section of the upper track and the input end of the lower track.

10. The double-layer track apparatus according to claim 9, wherein a diameter-reducing portion is formed in a middle of the sample holder, the opening of the pallet matches with the diameter-reducing portion of the sample holder,
the pallet is provided with a holding slot in communication with the opening, and the holding slot is configured to hold the sample holder.

11. The double-layer track apparatus according to claim 10, wherein a bearing platform is provided in the holding slot, and an upper large-diameter portion of the sample holder is configured to be seated on the bearing platform.

12. The double-layer track apparatus according to claim 10, wherein the holding slot comprises two or more holding slots, which are arranged on the pallet along a move-in or move-out direction of the sample holder,
two adjacent holding slots are connected through a passage, and the passage matches with the diameter-reducing portion of the sample holder.

13. The double-layer track apparatus according to claim 9, wherein the mobile unit comprises a horizontal mobile unit and a vertical mobile unit, the horizontal mobile unit is arranged on a horizontal base plate, and the vertical mobile unit is arranged on a vertical base plate,
the pallet is connected to an output end of the vertical mobile unit, the vertical base plate is connected to an output end of the horizontal mobile unit, and the horizontal base plate is fixed to a fixed bracket.

14. The double-layer track apparatus according to claim 13, wherein the horizontal mobile unit comprises a horizontal conveying belt, a first driving wheel, a first idle wheel, and a first motor,
the horizontal conveying belt is wound around the first driving wheel and the first idle wheel, and the first driving wheel is driven by the first motor.

15. The double-layer track apparatus according to claim 14, wherein a horizontal guiding track is arranged on the horizontal base plate, a horizontal slider is connected to the vertical base plate, and the horizontal slider is configured to slidably cooperate with the horizontal guiding track.

16. The double-layer track apparatus according to claim 14, wherein a horizontal position detector is provided on the horizontal base plate,
the horizontal position detector is configured to detect whether the vertical mobile is in position when a horizontal movement of the vertical mobile unit driven by the first motor is ended and trigger an alarm when detecting that the vertical mobile unit is not in position.

17. The double-layer track apparatus according to claim 13, wherein the vertical mobile unit comprises a vertical conveying belt, a second driving wheel, a second idle wheel, and a second motor,
the vertical conveying belt is wound around the second driving wheel and the second idle wheel, and the second driving wheel is driven by the second motor.

18. The double-layer track apparatus according to claim 13, wherein a vertical guiding track is provided on the vertical base plate, a vertical slider is connected to the pallet, and the vertical slier is configured to slidably cooperate with the vertical guiding track.

19. The double-layer track apparatus according to claim 17, wherein a vertical position detector is provided on the vertical base plate,
the vertical position detector is configured to detect whether the pallet is in position after a vertical movement of the pallet driven by the second motor is ended and trigger an alarm when detecting that the pallet is not in position.

20. The double-layer track apparatus according to claim 8, wherein the transferring device comprises a second transferring device, the second transferring device comprises:
a conveyer unit comprising a closed-loop conveyer member;
a plurality of carrying members, which are arranged along the conveyer member and connected to the conveyer member; and
a robotic arm configured to place the sample holder onto or remove the sample holder from the carrying members.

21. The double-layer track apparatus according to claim 20, wherein the conveyer unit comprises:
a third motor;
a third driving wheel, which is driven to rotate by the third motor; and
a third idle wheel, wherein the third driving wheel and the third idle wheel are arranged vertically, and the conveyer member is wound around the third driving wheel and the third idle wheel.

22. The double-layer track apparatus according to claim 21, wherein the conveyer member is a conveying chain or a conveying belt.

23. The double-layer track apparatus according to claim 22, wherein the third driving wheel is located below the third idle wheel.

24. The double-layer track apparatus according to claim 22, wherein a limit guiding bar is provided inside a closed loop of the conveying chain and extends in a vertical direction, and the conveying chain is supported by a side of the limit guiding bar.

25. The double-layer track apparatus according to claim 20, wherein the carrying member comprises a bearing plate and a protective plate, the protective plate is arranged on a side of the bearing plate, and an opening end is formed on a side of the bearing plate close to the upper track or the lower track.

26. The double-layer track apparatus according to claim 25, wherein an outwards bevel is provided on a portion of the protective plate located at the opening end.

27. The double-layer track apparatus according to claim 25, wherein the carrying member further comprises a connecting plate, the connecting plate is located on a side away from the opening end and located on a side opposite to the protective plate on the bearing plate,
an auxiliary plate is provided on the conveyer member and is connected to the connecting plate through bolts.

28. The double-layer track apparatus according to claim 25, wherein the robotic arm comprises a first automatic push rod, which is arranged on a support frame of the second transferring device,
the first automatic push rod is configured to push the sample holder on the bearing plate to the input end of the lower track or to the input end of the upper track.

29. The double-layer track apparatus according to claim 25, wherein the robotic arm further comprises a second automatic push rod, which is arranged on the lower track or the upper track,
the second automatic push rod is configured to push the sample holder at the output end of the lower track or the sample holder at the output end of the downstream section of the upper track to the corresponding bearing plate.

30. A transferring method for transferring sample holders, comprising a method for transferring a sample holder from a lower track to an upper track, wherein the method for transferring the sample holder from the lower track to the upper track comprises the following steps:
S1: determining whether there is a sample holder at a lower output-end stop, and if yes, moving to step S2,
S2: determining whether a transferring device is in an idle condition, and if yes, moving to step S3,
S3: determining whether an upper input-end stop is in a full state, and if no, moving to step S4,
S4: the transferring device receiving the sample holder,
S5: determining whether there is a second sample holder at the lower output-end stop, if no, moving to step S8, and if yes, moving to step S6,
S6: determine whether it is sufficient to accommodate two sample holders at the upper input-end stop, if no, moving to step S8, and if yes, moving to step S7,
S7: the transferring device receiving a second sample holder,
S8: the transferring device lifting the sample holder to the upper track,
S9: the transferring device returning back to the lower track.

31. The transferring method according to claim 30, further comprising a method of transferring the sample holder from the upper track to the lower track, wherein the method of transferring the sample holder from the upper track to the lower track comprises the following steps:
T1: determining whether there is a sample holder at a tube-detection device, and if yes, move to step T2,
T2: the tube-detection device detects whether there is a sample tube on the sample holder, if yes, move to step T3; and if no, move to step T4,
T3: transfer the sample holder back to the testing unit,
T4: determine whether the upper output-end stop is in a full state, and if no, moving to step T5,
T5: releasing the sample holder to the upper output-end stop,
T6: determining whether the transferring device is in an idle condition, and if yes, moving to step T7,
T7: the transferring device receives the sample holder,
T8: determine whether there is more sample holder at the upper output-end stop, if yes, move to step T9; and if no, move to step T10,
T9: the transferring device receiving another sample holder,
T10: the transferring device transferring the another sample holder to the lower track,
T11: the transferring device returning back to the upper track.
